# EUROPÄISCHE PATENTSCHRIFT

(11) **EP 3 481 208 B1**
(45) Veröffentlichungstag und Bekanntmachung des Hinweises auf die Patenterteilung: **02.06.2021**
(21) Anmeldenummer: 18706211.2
(22) Anmeldetag: 05.02.2018
(51) Int. Cl.: A23B 7/152, A23L 3/3445, B65D 81/20, B65D 85/34

(54) **REIFEKAMMER UND VERFAHREN ZUR FRUCHTREIFUNG**
RIPENING CHAMBER AND METHOD FOR RIPENING FRUIT
CHAMBRE DE MATURATION ET PROCÉDÉ POUR FAIRE MÛRIR DES FRUITS

(30) Priorität: 16.03.2017 DE 102017105725
(43) Veröffentlichungstag der Anmeldung: 15.05.2019
(73) Patentinhaber: Einenkel / Wirth Gbr, 06188 Landsberg (DE)
(72) Erfinder: DE BORTOLI, Valdir, 56332-578 Petrolina (PE) (BR)
(74) Vertreter: Gulde & Partner
(86) Internationale Anmeldenummer: PCT/EP2018/052831
(87) Internationale Veröffentlichungsnummer: WO 2018/166713

(56) Entgegenhaltungen:
- EP-A1- 2 044 844
- WO-A1-95/00030
- WO-A1-2011/082059
- AU-A- 2 523 200
- DE-A1-102013 015 182
- GB-A- 2 400 299
- US-A1- 2003 150 334
- US-A1- 2013 013 099
- US-A1- 2016 249 630

## Beschreibung

Die vorliegende Erfindung betrifft eine Reifekammer und ein Verfahren zur Fruchtreifung. Insbesondere betrifft die vorliegende Erfindung eine Bananen-Reifekammer und ein Verfahren zur künstlichen Reifung von Bananen (Bananen-Reifetechnik).

Typischerweise werden Bananen für den Verbrauchermarkt bereits im grünen (d.h. unreifen Zustand) geerntet und weiterverarbeitet. Die geernteten grünen Bananen werden anschließend zumeist in Kartons auf Paletten in speziellen Reifekammern auf eine gewünschte gelbe Farbe innerhalb von 4 - 7 Tagen gereift.

Der Einsatz von Reifekammern ist jedoch nicht auf Bananen beschränkt und kann analog auch für den Reifungsvorgang anderer Früchte angewendet werden.

In solchen Reifekammern wird herkömmlicherweise starr nach einem bestimmten Zeitschema die Lufttemperatur (teilweise auch unter Kontrolle der Fruchttemperatur) geregelt und für 24 Std. eine Ethylenkonzentration (z.B. 500 ppm oder höher) in der Kammer eingestellt. Die typischen Parameter zur Fruchtreifung im Stand der Technik sind daher: Temperatur der Luft, Temperatur der Frucht (Banane), Ethylenkonzentration > 500 ppm. Teilweise

Durch die Temperaturerhöhung und die Ethylenbegasung wird die Ware extrem zur Reifung angestoßen, um anschließend mit hohem Energiebedarf und unter hohem technischem Aufwand für die Temperaturregelung eine Überhitzung der Ware zu vermeiden und die Temperatur der Früchte kontrollieren zu können.

Vereinzelt wird in Reifebetrieben zur Lagerung von grünen Bananen wie auch nach der Reifung im Anschluss zur Lagerung CA-Technik (CA - controlled atmosphere) für die Reifekammer eingesetzt, um nach der Reifung die Frische der gereiften Ware besser halten zu können bzw. die Ware für den Verkauf haltbar zu machen. Mittels CA-Technik können kontrolliert der Sauerstoffanteil in der Reifekammer abgesenkt und die CO₂-Konzentration erhöht werden, was die Reifung stoppt. Für diese Technik werden jedoch spezielle Kammern mit gasdichtem Tor, Stickstofferzeuger, CO₂-Adsorber-Technik und entsprechende Messtechnik benötigt.

Der CA-Effekt ist insbesondere bei Bananen bekannt und wird dort zur Lagerung bzw. Haltbarmachung der gereiften Früchte genutzt.

Konventionelle Reifekammern und Verfahren werden insbesondere in US 2016 / 249 630 A1 und AU 25232 00 A dargestellt.

Nachteile des im Stand der Technik genutzten Reifungsverfahrens bzw. der dafür genutzten Reifekammern sind der relativ lange Reifungsvorgang, eine hohe Belastung für den Energiespeicher der Frucht der darin gereiften Früchte sowie eine zumeist ungleichmäßige Reifung innerhalb der Kammer, die beispielsweise von der Position der Früchte in der Reifekammer als auch dem Ausgangszustand der Früchte vor Überführung in die Reifekammer beeinflusst wird. Desweiteren werden durch zu hohe und unkontrollierte Ethylen- und CO₂-Werte negative biologische Effekte an der Frucht verursacht, die sich in der Verschlechterung von Geschmack, Aroma und Haltbarkeit zeigen. Dies ist insbesondere bei Bananen zu beobachten.

Es ist somit Aufgabe der vorliegenden Erfindung, ein verbessertes Reifungsverfahren für Reifekammern und entsprechende Reifekammern anzugeben. Insbesondere soll ein schonenderer Reifungsvorgang erreicht werden.

Diese Aufgaben werden durch einen Verfahren sowie eine Reifekammer mit den Merkmalen der unabhängigen Ansprüche gelöst.

Somit betrifft ein erster Aspekt der Erfindung ein Verfahren zum Reifen von Früchten, insbesondere Bananen, bei welchem in einem gasdichten Reifungsraum die zu reifenden Früchte angeordnet werden und während der Reifung der Früchte deren Respirationaktivität gemessen wird, wobei im Reifungsraum eine vorbestimmte Ethylenkonzentration eingestellt und geregelt wird, die über die Dauer des Reifungsprozesses variiert wird, wobei die Ethylenkonzentration in Abhängigkeit eines Anstiegs einer CO2-Konzentration und / oder in Abhängigkeit einer Abnahme einer O2-Konzentration variiert wird.

Im Unterschied zur Standard-Reifung in Reifekammern, wobei während des Reifeprozesses eine Temperatur sowie eine Ethylenkonzentration einmalig eingestellt wird, wird bei dem erfindungsgemäßen Reifeverfahren, insbesondere zur Anwendung in einer erfindungsgemäßen Reifekammer, neben einer kontrollierten Temperaturführung auch die Respiration (Atmung) der Ware gemessen und insbesondere durch eine Regelung einer Gaskonzentration (CO₂ / O₂ / Ethylen) in einem Reifungsraum der Kammer gesteuert.

Der wesentliche Vorteil der vorliegenden Erfindung ist, dass eine gesunde und stabile Fruchtreifung innerhalb weniger Tage erreicht werden kann. Beispielsweise kann bei Bananen eine Reifung innerhalb von nur 3 Tagen eine Farbe erreicht werden, die einer Reifezahl im Bereich von 2,5 bis 3,5 entspricht. Dabei kann insbesondere auf ein extremes Aufheizen und den damit verbundenen Stressverzichtet werden, was anschließend zu Problemen bei der Temperaturführung (zu hohe Bananen-Temperatur) auf der Vermarktungsstrecke führen würden . Die Haltbarkeit (shelf life) der Ware wird zudem deutlich verbessert, da der natürliche Energiespeicher der Bananen geschont wird, was zu einer guten Haltbarkeit nach der Reifung führt. Weiterhin wird eine bessere und gleichmäßigere Reifung über die gesamte Reifekammer erreicht. Die Qualität der erfindungsgemäß gereiften Früchte ist reproduzierbar und damit konstant gut. Ferner kann die dafür notwendige Reifungszeit (Abhängig von der Waren-Ausgangs-Qualität und -situation) automatisch vom Reifeprogramm ermittelt und berechnet (kann somit entsprechend variieren) werden. Durch die Berücksichtigung der Fruchtrespiration beim Reifungsprozess kann der Verbrauch von Ethylen gezielt auf den Bedarf der Bananen gesteuert und damit deutlich gegenüber dem Stand der Technik reduziert werden. Durch die verkürzte Reifungsdauer kann zudem der Reifekammerdurchsatz erhöht und Energie für die Prozessführung eingespart werden. Insbesondere kann die Ware auch einfacher im jeweils aktuellen Reife-Stadium gestoppt bzw. dort gehalten werden. Dies ist besonders bei langen Lieferwegen bis zum Endkunden von Vorteil, da hierbei ein vorbestimmter Reifezustand variiert und durch das erfindungsgemäße Verfahren gesteuert werden kann. Weiterhin kann flexibel auf veränderte Verkaufs-/ Absatz-Mengen für den Einzelhandel reagiert werden, was zu einer deutlich reduzierten Gefahr von Reklamation und Waren-Ausfall (Verderb) führt.

In einer bevorzugten Ausgestaltung der Erfindung ist daher vorgesehen, dass die Reifung in Abhängigkeit einer Respiration der Früchte über eine CO₂-, eine O₂-Konzentration und eine Ethylenkonzentration in der Kammer, insbesondere in einem Reifungsraum der Kammer, kontrolliert und gesteuert wird. Dem liegen die Erkenntnisse über den Reifungsprozess von Früchten, insbesondere von Südfrüchten, zu Grunde. Während des Reifungsprozesses erfolgt ein Gasaustausch der Früchte mit der Umgebung, der als Respiration, also Atmung, bezeichnet wird. Unter Aufnahme von Sauerstoff reifen die Früchte unter Bildung und Einlagerung von niedermolekularen Kohlehydraten, insbesondere Zuckern. Dabei wird Kohlendioxid gebildet, welches als Respirationsgas entweicht. Dieser Prozess wird durch Anwesenheit von Ethylen, also C₂H₄, getriggert, wobei das Ethylen in Gegenwart von Sauerstoff zu den relevanten Kohlehydraten umgesetzt wird. Neben den Beschriebenen finden simultan durch die Reifung weitere Prozesse in der Frucht statt, die sich beispielsweise in der Farbe und/oder der Festigkeit der Frucht zeigen, so dass die Respirationsparameter (CO₂. C₂H₄ und O₂) ein Indiz für den Reifegrad darstellen können.

Die Bildung von Kohlendioxid, die mit einem Anstieg einer CO₂-Konzentration in der Reifekammer verbunden ist, kann in einer gasdichten Reifungskammer demnach als Maß für die mit einer Reifung der Früchte verbundenen Zuckerbildung dienen . Der Verbrauch von Sauerstoff, also die Abnahme einer Sauerstoffkonzentration in der Reifungskammer, sowie der Anstieg ein Verbrauch von Kohlendioxid, also die Zunahme einer Kohlendioxidkonzentration in der Reifungskammer, dienen erfindungsgemäß als Maß für den Fortschritt der Reifung der Früchte.

Die vorliegende Erfindung zeichnet sich gegenüber herkömmlichen Reifeverfahren daher insbesondere dadurch aus, dass die Fruchtatmung beim Reifungsprozess, insbesondere in einer erfindungsgemäßen Reifekammer, durch geeignete Mittel zur Messung der Respiration sowie eines Mittels zur Auswertung der erhaltenen Messwerte kontrolliert und überwacht wird.

Zudem zeichnet sich die vorliegende Erfindung dadurch aus, dass die CO₂-Konzentration über die gesamte Reifung als Reifungsparameter (und nicht nur als reifungshemmender Lagerfaktor wie im Stand der Technik) in einem entsprechenden Reifeverfahren mit bei Prozessablauf des Reifevorgangs berücksichtig und kontrolliert wird.

Es hat sich gezeigt, dass eine übermäßige Ethylen-Begasung von Früchten gewissermaßen zu einer Übersteuerung des Reifungsprozesses führen kann, welche nur schwerlich zu stoppen und zu kontrollieren ist. Dies hat zur Folge, dass die Früchte unkontrollierter reifen und der Energiespeicher der Früchte stärker verbraucht überstrapaziert wird, was sich in einem unregelmäßigen Reifungsbild sowie einer reduzierten Lagerfähigkeit der Früchte manifestiert. Auch wird dadurch der Geschmack der Banane durch Gärungseffekte negativ beeinflusst. Die erfindungsgemäße Messung der Respiration ermöglicht nun eine gezielte Begasung der Früchte mit Ethylen, welche ein nötiges Maß an Ethylen nicht überschreitet, sodass eine besonders schonende Reifung der Früchte erzielt wird.

In bevorzugter Ausgestaltung der Erfindung ist daher vorgesehen, dass in einem Reifungsraum der Kammer eine vorbestimmte Ethylenkonzentration eingestellt wird, die über die Dauer des Reifungsprozesses variiert wird. Dies hat den Vorteil, dass die Ethylenkonzentration ein notwendiges Maß nicht überschreitet und insbesondere während des Prozesses an den Fortgang der Reifung angepasst werden kann, was wiederum zu schonend gereiften Früchten mit einem gleichmäßigen Reifungsbild führt.

In besonders bevorzugter Ausgestaltung der Erfindung ist zudem vorgesehen, dass bei einer Begasung mit Ethylen die Ethylenkonzentration in einem Bereich von 50 ppm bis 300 ppm, vorzugsweise in einem Bereich von 80 ppm bis 220 ppm liegt, insbesondere zu keinem Zeitpunkt während des erfindungsgemäßen Verfahrens über 300 ppm liegt. Es zeigte sich, dass eine Begasung von mehr als 300 ppm in der Reifungskammer zu einer Übersteuerung des Reifungsprozesses führt, was durch die angegebenen bevorzugten Konzentrationen vermieden wird.

Die angegebenen Werte beziehen sich insbesondere auf zu mindestens 60 % gefüllte Reifungskammern und sind bei geringerer Auslastung der Reifungskammern entsprechend anzupassen. Dabei ist beispielsweise der Ethylenwert als geregelter absoluter zugeführter Gaswert in ppm anzusehen. Als flexibler Sollwert spiegelt er hingegen die CO₂-Produktion wider, die wiederum mit der Belegungsmenge in der Kammer zusammen hängt. Mit anderen Worten, je weniger Ware in der Kammer umso niedriger ist die zu messende CO₂-Produktion

Mit Vorteil wird die Ethylenkonzentration innerhalb des Reifungsraums der Kammer nach einer vorbestimmten Zeitdauer reduziert und auf dem reduzierten Niveau, insbesondere von nicht mehr als 50 ppm vorzugsweise nicht mehr als 30 ppm, konstant gehalten. Diese Ausführungsform des erfindungsgemäßen Verfahrens optimiert die Gleichmäßigkeit der Fruchtreifung sowie die Haltbarkeit der gereiften Früchte weiter, da die Reifung noch schonender erfolgt. Eine zunächst höhere Konzentration ist notwendig, um die Reifung zunächst in Gang zu bringen, wird dann aber auf ein Mindestmaß an Ethylen reduziert, um eine fortschreitende, sehr schonende Reifung bis zu einem vorbestimmten Sollwert zu realisieren. Darüber hinaus hat diese Ausgestaltung den Vorteil der Einsparung von Ethylen, was ein Kostenersparnis mit sich bringt.

Mit besonderem Vorteil umfasst der Reifungsprozess des erfindungsgemäßen Verfahrens mehrere Phasen, die insbesondere durch die Gaskonzentrationen und/oder die Temperaturen im Reifungsraum gekennzeichnet sind. Dabei ist in einer ersten Phase ein stetiger Anstieg, in einer Zwischenphase oder zweiten Phase ein Anstieg, der weniger steil ist als der der ersten Phase, und in einer Endphase eine konstante Kohlendioxidkonzentration im Reifungsraum messbar.

Die erste Phase, oder auch Startphase, des erfindungsgemäßen Verfahrens ermöglicht zunächst, dass alle im Reifungsraum der Kammer angeordneten zu reifenden Früchte zunächst auf einen ähnlichen Reifungszustand gebracht werden, so dass alle Früchte im Wesentlichen die gleichen Startvoraussetzungen zur Reifung zeigen und damit unter folgenden gleichen Reifungsbedingungen ein vergleichbares Reifungsergebnis ausbilden. Ein Maß dafür ist die Kohlendioxidabgabe der Früchte bei der Reifung. Diese steigt mit einsetzender Reifung zunächst abrupt und im Fortgang der Reifung stetig an. Erst wenn bei allen Früchten eine stetige und gleichmäßige Abgabe von Kohlendioxid innerhalb eines Zeitraumes erfolgt, kann in der Reifungskammer ein stetiger Anstieg der Kohlendioxidkonzentration gemessen werden. An dieser Stelle sei angemerkt, dass bei dem erfindungsgemäßen Verfahren, welches die Durchführung in einem gasdichten Reifungsraum vorsieht, wie oben bereits beschrieben, die CO₂-Konzentration bzw. deren Zunahme oder Abnahme stets indirekt proportional zu einer Sauerstoff-Konzentration bzw. deren Zunahme oder Abnahme verhält, sofern keine aktive Entnahme oder Zuführung eines der Gase (O₂, N₂, CO₂) in den Reifungsraum erfolgt. Bevorzugt kennzeichnet das konstante Zunehmen der CO₂-Konzentration, bzw. eine konstante Abnahme der O₂-Konzentration, den Startpunkt einer Zwischenphase, in der eine aktive Begasung mit Ethylen erfolgt.

Mit besonderem Vorteil wird in der Zwischenphase die CO₂-und/oder die O₂-Konzentration bei einem niedrigen Anstieg im Bereich von 0,1 - 0,5 Vol. %, insbesondere im Bereich von 0,1 bis 0,3 Vol. %, konstant gehalten, was eine schonendere Reifung charakterisiert. Als Endpunkt der Zwischenphase wird bevorzugt das Erreichen einer maximalen Kohlendioxidkonzentration, insbesondere eines vorbestimmten Werts im Bereich von 1,5 bis 3 Vol %, vorzugsweise bei 2 Vol.%. Alternativ oder zusätzlich kann das Erreichen eines vorbestimmten Farbeindrucks der Früchte (insbesondere bei Bananen) das Ende der Zwischenphase definieren.

In der Endphase werden durch Zufuhr von O₂ und Ethylen und/oder einer Entnahme von CO₂, beispielsweise durch einen CO₂-Gasadsorber, die Gaskonzentrationen auf einem bestimmten Niveau konstant gehaltenso dass eine weitere Reifung zunehmend unterbunden wird.

Mit besonderem Vorteil wird in der Zwischenphase der Sollwert für eine Ethylenzufuhr geregelt, die Ethylenkonzentration also in Abhängigkeit von der Kohlendioxidkonzentration abgesenkt oder erhöht, um eine zu schnelle Reifung zu verhindern oder den Reifeprozess zu stimulieren.

In einer bevorzugten Ausgestaltung ist vorgesehen, dass die CO₂-Konzentration durch Zugabe von Ethylen, Zugabe von Sauerstoff, Zugabe von Stickstoff und/oder Entfernung von CO₂ reguliert wird. Diese Ausgestaltung ermöglicht einen aktiven Eingriff in den Reifungsprozess und damit verbunden ein durch regelbare Parameter initiiertes Verstärken oder Reduzieren des Reifeprozesses in den Früchten. Optional wird ein aktives Manipulieren des Reifungsvorgangs darüber hinaus durch weitere atmosphärische Parameter innerhalb des Reifungsraums der Kammer ermöglicht. Somit ist in weiter bevorzugter Ausgestaltung der Erfindung vorgesehen, dass eine Kontrolle und/oder Steuerung der Temperatur (Luft und Frucht) im Reifungsraum und somit der Früchte erfolgt, wobei die Messung der Parameter fortlaufend oder in Intervallen erfolgt.

Mit besonderem Vorteil erfolgt die Messung und/oder Steuerung der vorgenannten Parameter konstant oder in vorbestimmten Intervallen. Dies sieht insbesondere vor, dass die Messwerte dauerhaft oder in kurzen Intervallen überwacht werden und nur bei über- oder unterschreiten eines kritischen Grenzwertes eine Steuerung erfolgt. Alternativ oder zusätzlich erfolgt eine Steuerung, nach Justierung, bzw. Neueinstellung einzelner Parameter in vordefinierten Intervallen bzw. zu vorbestimmten Zeitpunkten, wobei diese in einem definierten Verfahrenszyklus hinterlegt sind. In dieser Ausgestaltung umfasst das erfindungsgemäße Verfahren in Abhängigkeit von einem Ausgangszustand der Früchte, der Art der Früchte und/oder der Menge der Früchte insbesondere mehrere Zyklen, die in den vorbeschriebenen drei Phasen enthalten sind und insbesondere Zeitintervalle, Temperaturparameter und Begasungsparameter sowie Grenzwerte für Gaskonzentrationen innerhalb des Reifungsraums beinhalten. Diese Ausgestaltung ermöglicht eine im weitesten Sinne automatisierbare Durchführung des erfindungsgemäßen Verfahrens.

Vorzugsweise wird zusätzlich eine Messung eines Reifegrads der Früchte mittels photometrischer Messung durchgeführt, die vorzugsweise automatisiert durchgeführt wird. Hierzu wird insbesondere der Farbeindruck der Früchte bestimmt und diesem eine sogenannte Reifezahl (nach Farbtafeln von Bananen-Produzenten) zugeordnet. Der photometrisch gemessene Reifegrad wird zusätzlich zur gemessenen Respiration als Reifeindikator verwendet und insbesondere im Sinne einer Regelschleife als Regelparameter für das Verfahren verwendet. So kann zusätzlich zu einer gemessenen CO₂-Konzentration in Abhängigkeit einer photometrisch bestimmten Reifezahl die Regelung der Reifeparameter wie Temperatur und Ethylenkonzentration in einer zu den oben beschriebenen Ausführungen äquivalenten Art und Weise erfolgen.

Als weiterer Reifeindikator, der ein im weitesten Sinne proportionales Verhalten zum Reifegrad von Früchten, insbesondere Bananen, aber auch Tomaten, zeigt ist ein relativer Gehalt von Chlorophyll auf einer Oberfläche bzw. einem oberflächennahen Bereich der Frucht. Dieser wird dann wie oben für die Bestimmung des Reifegrads anhand eines Farbeindrucks als Regelparameter zugänglich. Der relative Chlorophyllgehalt wird vorzugsweise indirekt durch Strahlung gemessen, welche nach Anregung des in der Frucht enthaltenen Chlorophylls mit Licht, insbesondere mit IR-Strahlung, emittiert wird.

Demnach wird ein Verfahren zum Reifen von Früchten offenbart, insbesondere Bananen, bei welchem in einem gasdichten Reifungsraum die zu reifenden Früchte angeordnet werden und während der Reifung der Früchte deren Reifung anhand einer Respiration, eines relativen Chlorophyllgehalts bzw. dessen Änderung über die Zeit und optional eines Farbeindrucks gemessen wird.

Ein weiterer Aspekt der Erfindung betrifft eine Reifekammer zum Reifen von Früchten umfassend einen gasdichten Reifungsraum, wobei die Reifekammer eingerichtet ist, das erfindungsgemäße Verfahren in einer der vorgenannten Ausführungsformen auszuführen und ein Mittel zur permanenten Luftumwälzung im Reifungsraum aufweist, wobei die Reifekammer je ein Mittel zur Messung einer Ethylenkonzentration, einer CO2-Konzentration, einer O2-Konzentration und optional einer Temperatur innerhalb des Reifungsraums sowie entsprechende Mittel zur Auswertung der erhaltenen Messwerte und ein mit einem Mittel zur Auswertung verbundenes Mittel zur Steuerung und Regelung der Ethylenkonzentration innerhalb des Reifungsraums der Kammer umfasst, und optional ein weiteres mit einem Mittel zur Auswertung verbundenes Mittel zur Steuerung und Regelung einer Atmosphäre innerhalb des Reifungsraums der Kammer umfasst. Diese Ausgestaltung ermöglicht eine Überwachung der für das erfindungsgemäße Verfahren essenziellen Respiration sowie eine aktive Steuerung des Reifungsprozesses durch die atmosphärischen Parameter in dem Reifungsraum. Vorzugsweise umfasst die Kammer einen Reifungsraum, welcher nach Kriterien einer sogenannten CA-Lagertechnik, also gasdicht ausgeführt ist und als solcher nach außen CA-Gasdicht abgeschlossen ist. Die Anforderung an die Gasdichtigkeit ist dann erreicht, wenn nach Erzeugung eines Unter-/ oder Überdrucks von 15mm WS (Wasser-Säule = 150 Pa) im Reiferaum dieser innerhalb von 0,5 Stunden maximal um 5, vorzugsweise 4, insbesondere 3, bevorzugt 2 mm WS (20 Pa) abfällt/bzw. ansteigt, wobei ein geringerer Zahlenwert mit einer erhöhten Dichtigkeit einhergeht. Der Reifungsraum umfasst ein gasdichtes CA-Tor sowie bevorzugt ein Mittel zur Regelung der Zuluft, der Abluft und/oder eines Über-/Unterdrucks der Reifekammer. Zusätzlich sind vorzugsweise ein Mittel zur Erzeugung von Stickstoff, ein Mittel zur Adsorption von CO₂ und entsprechende Messtechnik vorgesehen und mit dem Reifungsraum der Kammer strömungstechnisch verbunden.

In weiter bevorzugter Ausgestaltung umfasst die Kammer ein mit mindestens einem Mittel zur Auswertung verbundenes Mittel zur Steuerung und Regelung einer Atmosphäre innerhalb des Reifungsraums der Kammer.

In bevorzugter Ausgestaltung umfasst die Kammer Mittel, die eine permanente Luftumwälzung ermöglichen, beispielsweise Luft-Ventilatoren. Diese wird durch ein Luftabschottungssystem am Früchte-Karton (Karton mit Palette) zur Erzeugung von Druckdifferenzen über den Karton verstärkt, da dann ein Luft- bzw. Gasaustausch durch die Kartons begünstigt ist. Dies ist insbesondere bei der Reifung von Bananen sinnvoll. Zur gleichmäßigen Reifung, die mit einer gleichmäßigen Farb-Entwicklung in allen Kartons einhergeht, wird vorzugsweise nur eine Luft-Drehrichtungs-Funktion installiert. Bei herkömmlichen Reife-Systemen war zur Verbesserung der Gleichmäßigkeit des Reifeergebnisses eine Lüfter-Drehrichtungs-Umkehrschaltungs-Funktion notwendig, was beim erfindungsgemäßen System nicht mehr erforderlich ist.

Beim erfindungsgemäßen System aus Reifekammer und Verfahren kann bei Bedarf Stickstoff in die Kammer gespült und überschüssiges CO₂ aus der Kammer-Atmosphäre entfernt werden. Ist der Sauerstoffgehalt zu niedrig, wird beispielsweise über ein gasdichtes Belüftungssystem Sauerstoff kontrolliert dem Reifungsraum zugeführt. Weiterhin passt sich die Luftumwälzungsmenge (Luftvolumenstrom und Drehzahl der Ventilatoren) im Reifungsraum dynamisch dem Reifeprozess und der Luftströmungs-Durchlässigkeit der Bananen-Kartons, vorzugsweise automatisch, an. Dabei wird mit Vorteil nur noch eine Drehrichtung/Luftrichtung der Lüfter-Ventilatoren über die Früchte-Kartons notwendig und trotzdem eine gleichmäßige Reifung und Farbentwicklung der Früchte im gesamten Reifungsraum sichergestellt.

Diese ideale gleichmäßige Reifung im Reifungsraum bzw. innerhalb der Kartons ermöglicht die visuelle Bestimmung des Reifegrades anhand des Farbeindrucks der Früchte. Dies ist insbesondere bei der Reifung von Bananen der Fall.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen und Aspekte der Erfindung sind, sofern im Einzelfall nicht anders ausgeführt, mit Vorteil miteinander kombinierbar. Insbesondere sind Darstellungen und Beschreibungen zu bevorzugten Ausgestaltungen und Ausführungsformen des Verfahrens stets entsprechend auf die Reifekammer übertragbar und *vice versa.*

Die Erfindung wird nachfolgend in Ausführungsbeispielen anhand der zugehörigen Zeichnungen erläutert. Es zeigt:

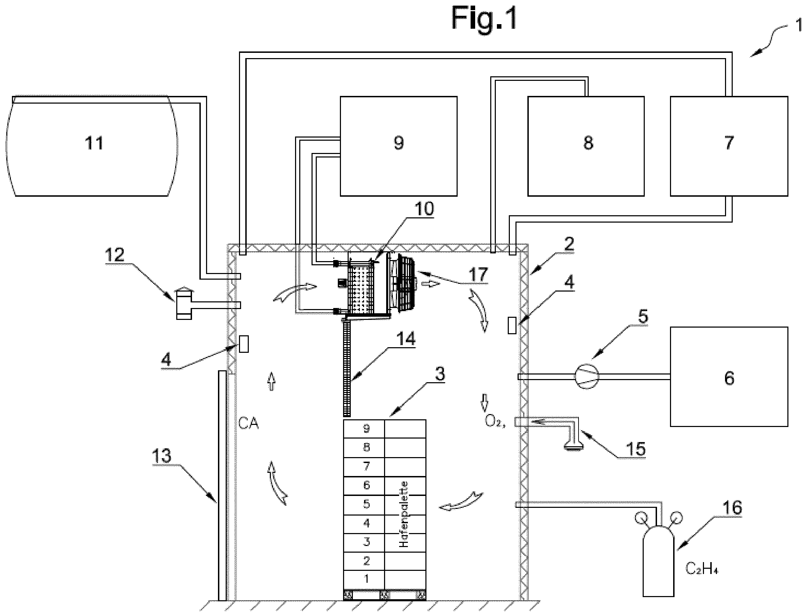

- Figur 1: eine schematische Darstellung einer erfindungsgemäßen Reifungskammer in einer bevorzugten Ausgestaltung der Erfindung.

Figur 1 zeigt eine erfindungsgemäße Reifekammer mit Technik 1 umfassend einen Reifungsraum 2 zur Aufnahme zu reifender oder zu lagernder Früchte. Der Reifungsraum 2 ist gasdicht im Sinne einer sogenannten CA-Qualität ausgeführt, so dass zwischen dem Inneren des Reifungsraumes 2 und einem Äußeren der Kammer 1 nur ein sehr geringer Gasaustausch stattfindet. Dies wird dadurch gewährleistet, dass der Reifungsraum 2 über eine CA-Tür 13 mit dem Füllgut 3, also den Früchten, beladen wird. Nur eine optimale Reifung und Lagerung von Obst und Gemüse mit absolut gleichmäßigen und reproduzierbaren Gaskonzentrationen gewährleistet gleichmäßige Reifung bzw. dauerhaft frische Früchte. Dies wird mit einer CA-Tür 13 sichergestellt, die beispielsweise nach dem Prinzip der statischen Anpresskraft schließt. Das Füllgut 3 ist beispielsweise auf einer sogenannten Hafenpalette angeordnet. Das Raumvolumen eines bevorzugten Reifungsraumes 2 beträgt üblicherweise je nach Kammertyp zwischen 177 m³ und 266 m³. Die Abmessungen können jedoch an einer Wunschmenge des Füllgut 3 sowie baulichen Gegebenheiten angepasst sein. In der bevorzugten Standardkammer mit 177 m³ bis 266 m³ Raumvolumen werden vorzugsweise bei einer Auslastung des Reifungsraumes von 100 % 24 sogenannte Hafenpaletten in einer sogenannten Neuner- Kartonstapelung gelagert. Bezogen auf Bananen als Früchte die in einem Karton zu ca. 20 Kilo gepackt werden, ergeben sich bei voller Auslastung 54 Kartons à 20 kg, also ungefähr 1.080 kg Bananen je Hafenpalette. Somit ergibt sich für 24 Paletten eine Gesamtreifemenge von 25.920 kg Bananen je Standard-Reifekammer 1.

Die Palettengröße, Paletten-Menge und Reifemenge kann variieren Es zeigte sich, dass ab einer Auslastung des Reifungsraums 2 von 60 %, also 14 gefüllten Paletten bezogen auf das obige Beispiel, die Konzentrationswerte im erfindungsgemäßen Verfahren nicht angepasst werden müssen. Bei einer niedrigeren Auslastung und optional bei jeder von 100 % abweichenden Auslastung des Reifungsraums 2 kann eine Anpassung der Überwachungs-und Regelungsparameter des erfindungsgemäßen Verfahrens, beispielsweise unter Zuhilfenahme eines Steuerprogramms, erfolgen.

Der Reifungsraum 2 weist zumindest ein Messmittel 4 beispielsweise zur Temperaturmessung auf bzw. ist mit einer Vorrichtung 5+6 verbunden, die eine Entnahme bzw. eine Umleitung von im Reifungsraum 2 befindlichem Gas zur Messung von Atmosphärenparametern ermöglicht. Diese Atmosphärenparameter sind beispielsweise eine Kohlendioxidkonzentration, eine Sauerstoff-Konzentration und/oder eine Ethylenkonzentration. Darüber hinaus ist der Reifungsraum 2 vorzugsweise strömungstechnisch mit einer Ethylenzufuhr 16, einer Sauerstoffzufuhr 15, beispielsweise als Frischluftzufuhr, sowie einem Stickstoff-Generator 8 verbunden. Diese können durch ein Steuermittel zur Regelung der Gasatmosphäre innerhalb des Reifungsraum 2 eine durch das Steuermittel definierte Gasmenge in den Reifungsraum 2 entlassen. Darüber hinaus ist der Reifungsraum strömungstechnisch mit einem Kohlendioxidadsorber 7 verbunden, der eine Entfernung von Kohlendioxid ermöglicht. Um einen Druckanstieg im Reifungsraum 2 bei einer Gaszufuhr, beispielsweise bei erforderlicher Frischluftzufuhr durch das Stellmittel 15, einer erforderlichen Stickstoff-Zufuhr oder aufgrund einer Ethylen-Begasung zu vermeiden, weist der Reifungsraum 2 ferner eine Druckklappe 12 auf, die eingerichtet ist, einen Über- oder einen Unterdruck auszugleichen. Alternativ oder zusätzlich ist der Reifungsraum 2 mit einer sogenannten Lunge 11 strömungstechnisch verbunden, in die übermäßiges Gas entlassen bzw. aus dem Gas zurückströmen kann. Damit können bestimmte Druckschwankungen im Reiferaum kompensiert werden.

Neben den Respirationsgasen Ethylen, Sauerstoff und Kohlendioxid kann die Reifung über weitere Parameter, insbesondere die Temperatur, innerhalb des Reifungsraums 2 beeinflusst werden. Um hier eine Eingriffsmöglichkeit vorzusehen, weist der Reifungsraum 2 vorzugsweise einen Wärmetauscher in Kombination mit Ventilatoren auf, der strömungstechnisch mit einer Temperaturregelung, beispielsweise einer Kühlung und/oder einer Heizung, verbunden ist.

Die zur Beeinflussung der Atmosphäre innerhalb des Reifungsraums 2 geeigneten Stellmittel und Vorrichtungen 4, 5, 6, 7, 8, 9, 11 sowie die Ethylenzufuhr 16 sind vorzugsweise mit einer Steuereinrichtung (nicht gezeigt) verbunden, in welcher beispielsweise ein Algorithmus zur Steuerung eines Verfahrens hinterlegt ist, der in Abhängigkeit von Messwerten und zeitlichen Parametern eine automatisierte Steuerung der Atmosphäre innerhalb des Reifungsraums 2 ermöglicht. Insbesondere wird hierbei das erfindungsgemäße Verfahren ausgeführt, welches automatisiert und/oder zumindest teilweise manuell gesteuert durchgeführt werden kann.

Dies kann vorzugsweise dadurch erfolgen, dass gemessen wird, wieviel CO₂ sich innerhalb von etwa 1 - 2 Stunden in dem Reifungsraum 2 durch die Reifungsvorgänge entwickelt bzw. um wieviel der CO₂-Anteil in der Reifekammer dabei ansteigt (Früchte wie Bananen nehmen Sauerstoff auf und geben die gleiche Menge an CO₂ ab). Nimmt diese Atmungsmenge einen im Wesentlichen konstanten Wert an und ist nicht schwankend, dann kann bereits die zweite Phase, bzw. Zwischenphase, mit der Ethylen-Begasung eingeleitet werden. In der zweiten Reifungsphase wird dadurch im Vergleich zum Stand der Technik eine deutlich geringere Ethylenkonzentration (80-200 ppm, vorzugsweise 150 ppm) benötigt. Im weiteren Verlauf wird dann der Ethylen-Anteil in der Kammer-Atmosphäre weiter abgesenkt und auf einem sehr niedrigen Niveau (15-40 ppm, vorzugsweise 30 ppm) gehalten. Weiterhin kann in dieser Phase auch eine bestimmte CO₂-Konzentration (hier als Reifefaktor und nicht als Lagerfaktor verwendet) eingestellt und vorzugsweise über einen längeren Zeitraum gehalten werden.

Um diese Atmosphäre auch über einen längeren Zeitraum konstant halten zu können, wird vorzugsweise auf CA-Technik zurückgegriffen. Ein ansonsten typischerweise durchgeführtes Spülen der Reifekammer mit Frischluft ist im erfindungsgemäßen Verfahren nicht vorgesehen.

Ein mit der vorbeschriebenen Reifungskammer durchführbares erfindungsgemäßes Verfahren wird anschließend detailliert in einer bevorzugten Ausführungsform beschrieben. In dieser Ausführungsform umfasst das Verfahren mehrere Zyklen, die im Wesentlichen einer ersten Phase, einer Zwischenphase und einer Endphase entsprechen oder in diese inkludiert sind.

Dabei wird in der ersten Phase ein vergleichbarer Zustand der einzelnen Früchte, bezogen auf das Reifungsstadium (Reifegrad und Warenzustand zu Beginn der Reifung), eingestellt. In der Zwischenphase erfolgt dann der eigentliche Reifungsprozess, welcher in der Endphase bei den Gaskonzentrationen konstant gehalten wird. Bezogen auf eine Kohlendioxidkonzentration umfasst die erste Phase einen vergleichsweise steilen Anstieg der Konzentration im Bereich von 0,1 bis 5%/h, vorzugsweise im Bereich von 0,2 bis 0,35%/h, die zweite Phase - die Zwischenphase - einen vergleichsweise niedrigen Anstieg im Bereich von 0,05 bis 0,2 % während in der Endphase der CO₂-Anstieg keine relevante Bedeutung mehr hat.

### Erste Phase:

Die erste Phase umfasst die Einstellung einer Temperatur in einem Temperaturbereich von 13 - 20 °C sowie eine regelmäßige, insbesondere stündliche, Messung der Kohlendioxidproduktion durch die Früchte selbst. Wenn diese einen konstanten Wert erreicht hat, mit anderen Worten wenn der Anstieg der Kohlendioxidkonzentration innerhalb des Reifungsraum linear und gleichmäßig ist, wird die Temperatur innerhalb des Reifungsraum leicht erhöht. Dieser Zustand wird einige Stunden gehalten und anschließend wird die Reifung durch eine Begasung mit Ethylen angestoßen. Hierbei wird mit einem variablen Start-Sollwert im Bereich von 80 - 300 ppm Ethylen begast, wobei der tatsächlich notwendige Wert auf Grundlage der Kohlendioxidkonzentration-Anstieg und der Füllmenge des Reifungsraums errechnet wird.

Innerhalb der ersten Phase wird von einem Anstieg der Kohlendioxidkonzentration im Bereich von 0,05 - 0,4 Volumenprozent in einem Zeitfenster von 1,5 - 3 Stunden ausgegangen.

### Zwischenphase:

Die Zwischenphase nimmt eine Zeitspanne von ungefähr 1 bis 3 Tagen ein, in der die Temperatur in einem Bereich von 15 - 20 °C stabil gehalten wird. Dabei wird in regelmäßigen Zeitintervallen, beispielsweise im Bereich von 1,5 - 2,5 Stunden, die Kohlendioxidkonzentration gemessen um zu bestimmen, wieviel Kohlendioxid durch die Früchte produziert wird, da dies ein Rückschluss auf den Reifungsprozess zulässt. Der Anstieg der Kohlendioxidkonzentration sollte in dieser Phase eine im Wesentlichen lineare Funktion mit einem niedrigen Anstieg, insbesondere mit einem niedrigeren Anstieg als in der ersten Phase, vorzugsweise einem Anstieg von unter 1 %, vorzugsweise unter 0,5 % beschreiben. Weicht die Kohlendioxidkonzentration, insbesondere deren Steigung, von dem Sollwert ab, wird durch die Stellmittel der Reifekammer 1 nachgeregelt. Ist beispielsweise ein Anstieg der Kohlendioxidkonzentration zu hoch, erfolgt also eine zu schnelle Reifung der Früchte, kann der Sollwert für eine Ethylenzufuhr abgesenkt werden bzw. der Reifungsraum mit Stickstoff gespült werden, um einen Sauerstoffgehalt innerhalb des Reifungsraum zu senken. Im umgekehrten Fall kann beispielsweise eine Ethylenzufuhr erhöht werden, um den Reifeprozess zu stimulieren.

Die Zwischenphase dauert im Wesentlichen so lange, bis ein gewünschter Reifegrad der Früchte eingestellt wurde. Hierzu wird die Frucht regelmäßig überprüft. Als Reifeindikator dient beispielsweise die Farbe oder aber die Beschaffenheit der Frucht. Insbesondere bei Bananen ist die Farbe der Frucht auch ein Ausdruck für den Reifegrad. Dabei korreliert eine zunehmende Gelbfärbung mit einem fortschreitenden Reifegrad der Banane. Bei Früchten die eine derartige Korrelation des Reifegrades mit dem äußeren Erscheinungsbild zulassen, kann die Überwachung des Reifegrades bzw. die Detektierung des Endzustandes automatisiert, beispielsweise mittels photometrischer Messungen des Reifegrads, erfolgen. Hierzu wird beispielsweise ein Farbeindruck der Früchte als Definitionen für den vorbestimmten Reifungsgrad, insbesondere als Reifezahl (wie für Bananen typisch) im Programm hinterlegt. Ist der Farbeindruck bei zumindest einer gemessenen Frucht erreicht, wird die Zwischenphase beendet und die Endphase eingeleitet, falls nicht erfolgt ein weiterer Reifungszyklus innerhalb der Zwischenphase.

Somit dienst alternativ oder zusätzlich zur Konzentration eines Respirationsgases bevorzugt die Bestimmung und Überwachung der Reifezahl als Maß für einen Farbeindruck als Regelparameter für das erfindungsgemäße Verfahren. Ebenso wie die Messung der Respirationsparameter erfolgt die Messung des Farbeindrucks und/oder die Zuordnung der Reifezahl manuell und/oder zumindest teilweise automatisiert, wobei der letzte Fall der automatisierten Messung und Zuordnung zwecks Prozessvereinfachung und Prozesssicherheit bevorzugt ist.

### Endphase:

In der Endphase wird die Temperatur ausgehend vom Temperaturwert der Zwischenphase langsam, also insbesondere über mehrere Stunden, insbesondere über 5 bis 30 Stunden, auf einen Wert von unter 15°C abgesenkt. Zusätzlich wird die Gasatmosphäre eingefroren, d. h. eine weitere Respiration unterbunden. Die Kohlendioxidkonzentration sowie die Ethylen- und die Sauerstoffkonzentration bleiben in dieser Phase im Wesentlichen konstant, wobei eine vergleichsweise hohe Kohlendioxidkonzentration von über 1 %, vorzugsweise über 1,5 %, eingestellt wird. Die Sauerstoffkonzentration sollte in dieser Phase in einem Bereich von 10 - 30 Volumenprozent, insbesondere nicht über 25 Volumenprozent, liegen.

In einer bevorzugten Ausgestaltung umfasst das erfindungsgemäße Reifeprogramm neun Zyklen, die den oben genannten drei Phasen zugeordnet werden können. Diese sind in Tabelle 1 gezeigt. Grundsätzlich wird das erfindungsgemäße Verfahren mit einer Zyklenzahl im Bereich von 4 bis 12 durchgeführt.

Nach Abschluss der Endphase ist der eigentliche Reifeprozess abgeschlossen. Der Reiferaum kann geöffnet werden und muss nicht mehr gasdicht verschlossen sein. Die Ware kann entweder kontrolliert in der Kammer weiter auf Wunschfarbe gereift oder außerhalb unter verschiedenen Temperaturen entsprechend der Wunschfarbe weiter reifen bzw. sich entwickeln.

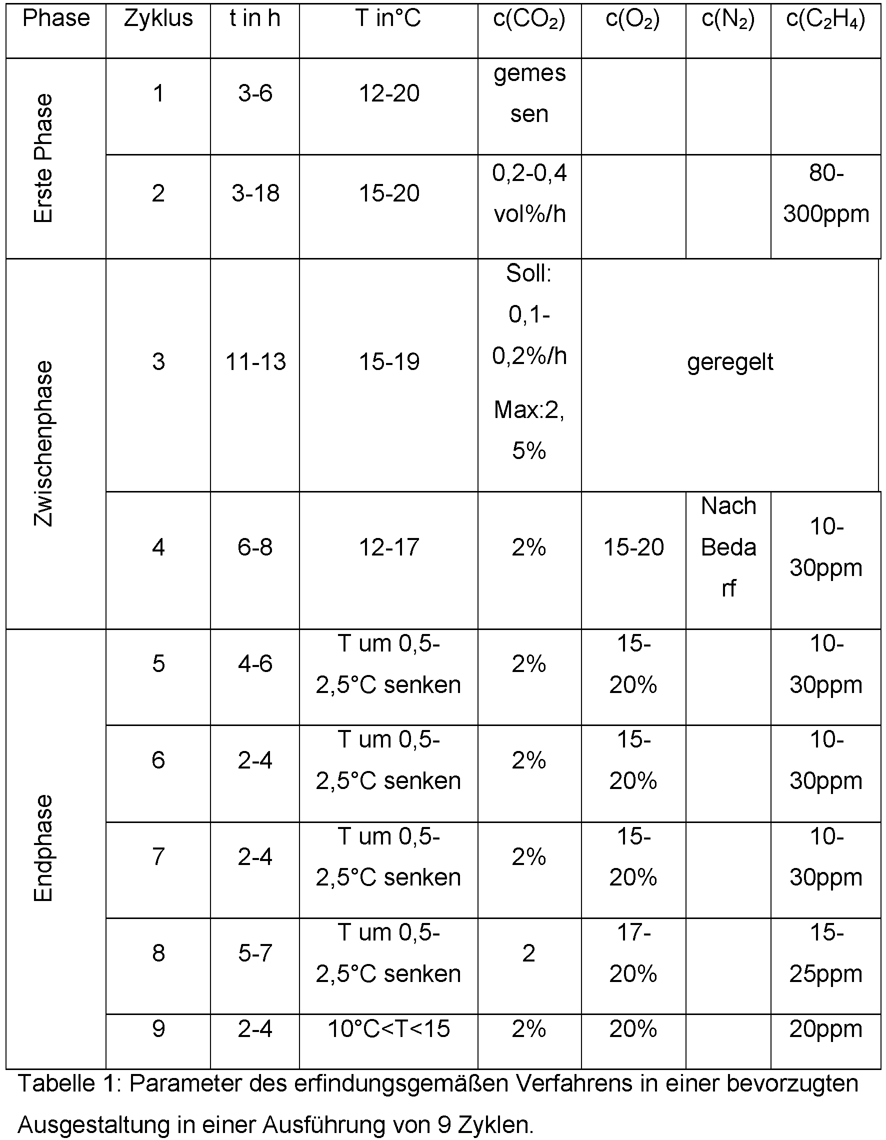

### Bezugszeichenliste

- 1: Reifekammer mit Technik
- 2: Reifungsraum
- 3: Transporthilfsmittel mit Ware
- 4: Temperaturfühler
- 5: Stellmittel Gas-Messpumpe
- 6: Steuermittel
- 7: CO₂-Adsorber
- 8: N₂-Generator
- 9: Gerät zur Übertragung von Kälte und Wärme an ein flüssiges Medium
- 10: Wärmetauscher Luft / flüssiges Medium zur Temperaturregelung (Kühlung/Heizung)
- 11: Lunge
- 12: Druckklappe
- 13: CA-Tor
- 14: flexibles Luft-Abschottungssystem
- 15: Sauerstoff-Belüftungseinrichtung mit Ventilator
- 16: Ethylen-Gasgemisch

## Patentansprüche

1. Verfahren zum Reifen von Früchten, insbesondere Bananen, bei welchem in einem gasdichten Reifungsraum (2) die zu reifenden Früchte angeordnet werden und während der Reifung der Früchte deren Respirationaktivität gemessen wird, wobei im Reifungsraum (2) eine vorbestimmte Ethylenkonzentration eingestellt und geregelt wird, die über die Dauer des Reifungsprozesses variiert wird, **dadurch gekennzeichnet, dass**
die Ethylenkonzentration in Abhängigkeit eines Anstiegs einer CO₂-Konzentration und / oder in Abhängigkeit einer Abnahme einer O₂-Konzentration variiert wird.

2. Verfahren nach Anspruch 1, wobei die Reifung in Abhängigkeit einer Respiration der Früchte über eine CO₂-, eine O₂-Konzentration und eine Ethylenkonzentration im Reifungsraum (2) kontrolliert und gesteuert wird.

3. Verfahren nach Anspruch 1, wobei bei einer Begasung mit Ethylen die Ethylenkonzentration im Bereich 50 ppm bis 300 ppm, vorzugsweise im Bereich von 80 bis 250 ppm, eingestellt wird.

4. Verfahren nach Anspruch 3, wobei nach einer vorbestimmten Zeitdauer die Ethylenkonzentration auf einem niedrigeren Niveau, insbesondere bei höchstens 50ppm, vorzugsweise bei höchstens 30 ppm, konstant gehalten wird.

5. Verfahren nach einem der vorhergehenden Ansprüche, **dadurch gekennzeichnet, dass** der Reifungsprozess mehrere Phasen umfasst, die durch ihre Gaskonzentrationen gekennzeichnet sind, wobei in einer ersten Phase ein stetiger Anstieg und in einer Endphase kein Anstieg der CO₂-Konzentration im Reifungsraum (2) messbar ist.

6. Verfahren nach Anspruch 5, **dadurch gekennzeichnet, dass** in einer Zwischenphase eine Begasung mit Ethylen erfolgt, sobald in der ersten Phase eine konstante Zunahme der CO₂-Konzentration und/oder eine konstante Abnahme der O₂-Konzentration gemessen wird.

7. Verfahren nach einem der Ansprüche 5 oder 6, **dadurch gekennzeichnet, dass** in der Endphase die CO₂- und/oder die O₂-Konzentration konstant gehalten wird.

8. Verfahren nach Anspruch 6, wobei in der Zwischenphase der Sollwert für eine Ethylenzufuhr geregelt wird, also in Abhängigkeit von der Kohlendioxidkonzentration abgesenkt oder erhöht wird, um eine zu schnelle Reifung zu verhindern oder den Reifeprozess zu stimulieren.

9. Verfahren nach einem der vorhergehenden Ansprüche, wobei eine Kontrolle und/oder Steuerung der Temperatur (Luft und Frucht) im Reifungsraum (2) und somit der Früchte erfolgt und/oder wobei die Messung der Parameter fortlaufend oder in Intervallen erfolgt.

10. Verfahren nach einem der vorhergehenden Ansprüche wobei ein Farbeindruck manuell und/oder automatisiert gemessen und optional mittels eines Algorithmus einem durch eine Reifezahl beschriebenen Reifegrad zugeordnet wird.

11. Verfahren nach Anspruch 10
44 , wobei die Messung des Reifegrads Teil einer Regelschleife innerhalb des Verfahrens ist.

12. Reifekammer (1) zum Reifen von klimakterischen Früchten umfassend einen gasdichten Reifungsraum (2), wobei die Reifekammer (1) eingerichtet ist, ein Verfahren nach einem der vorhergehenden Ansprüche auszuführen und ein Mittel zur permanenten Luftumwälzung im Reifungsraum (2) aufweist,
wobei die Reifekammer (1) je ein Mittel (4, 5, 6) zur Messung einer Ethylenkonzentration, einer CO₂-Konzentration, einer O₂-Konzentration und optional einer Temperatur innerhalb des Reifungsraums (2) sowie entsprechende Mittel (6) zur Auswertung der erhaltenen Messwerte und ein mit einem Mittel (6) zur Auswertung verbundenes Mittel (16) zur Steuerung und Regelung der Ethylenkonzentration innerhalb des Reifungsraums (2) der Kammer (1) umfasst, und optional ein weiteres mit einem Mittel (6) zur Auswertung verbundenes Mittel (7, 8, 9, 10,15) zur Steuerung und Regelung einer Atmosphäre innerhalb des Reifungsraums (2) der Kammer (1) umfasst.

## Claims

1. A method for ripening fruits, in particular bananas, in which the fruits to be ripened are arranged in a gas-tight ripening space (2), and while the fruits are being ripened, the respiration activity thereof is measured, wherein, in the ripening space (2), a predetermined ethylene concentration is set and controlled which is varied over the duration of the ripening process, **characterised in that**
the ethylene concentration is varied on the basis of a rise in a CO₂ concentration and/or on the basis of a fall in an O₂ concentration.

2. The method according to Claim 1, wherein the ripening is monitored and controlled on the basis of respiration of the fruits by means of a CO₂ concentration, an O₂ concentration, and an ethylene concentration in the ripening space (2).

3. The method according to Claim 1, wherein, during introduction of ethylene gas, the ethylene concentration is set in the range of 50 ppm to 300 ppm, preferably in the range of 80 to 250 ppm.

4. The method according to Claim 3, wherein after a predetermined period of time the ethylene concentration is kept constant at a lower level, in particular at at most 50 ppm, preferably at at most 30 ppm.

5. The method according to any one of the preceding claims, **characterised in that** the ripening process includes multiple phases, which are **characterised by** the gas concentrations thereof, wherein, in a first phase and a final phase, a steady increase and no increase, respectively, of the CO₂ concentration in the ripening space (2) are measurable.

6. The method according to Claim 5, **characterised in that** in an intermediate phase, ethylene gas is introduced as soon as a constant increase in the CO₂ concentration and/or a constant decrease in the O₂ concentration is measured in the first phase.

7. The method according to Claim 5 or 6, **characterised in that** in the end phase, the CO₂ concentration and/or the O₂ concentration is kept constant.

8. The method according to Claim 6, wherein in the intermediate phase, the target value for ethylene supply is controlled, i.e. decreased or increased on the basis of the carbon dioxide concentration, in order to prevent ripening that is too fast or to stimulate the ripening process.

9. The method according to any one of the preceding claims, wherein the temperature (air and fruit) in the ripening space (2) and thus of the fruits is monitored and/or controlled, and/or wherein the parameters are measured continuously or at intervals.

10. The method according to any one of the preceding claims, wherein the measurements are taken manually and/or in an automated manner, and optionally, by means of an algorithm, an assignment is made to a degree of ripening described by a ripening number.

11. The method according to Claim 10, wherein the measurement of the degree of ripening is part of a control loop within the method.

12. A ripening chamber (1) for ripening climacteric fruits, comprising a gas-tight ripening space (2), wherein the ripening chamber (1) is designed to carry out a method according to any one of the preceding claims and has a means for permanent air circulation in the ripening space (2), wherein the ripening chamber (1) comprises respective means (4, 5, 6) for measuring an ethylene concentration, a CO₂ concentration, an O₂ concentration and optionally a temperature within the ripening space (2) as well as corresponding means (6) for analysing the obtained measured values and a means (16) which is connected to an analysis means (6) and which is intended for controlling the ethylene concentration within the ripening space (2) of the chamber (1), and optionally comprises a further means (7, 8, 9, 10, 15) which is connected to an analysis means (6) and which is intended for controlling an atmosphere within the ripening space (2) of the chamber (1).

## Revendications

1. Procédé pour faire mûrir des fruits, en particulier des bananes, selon lequel les fruits à faire mûrir sont disposés dans une chambre de maturation étanche aux gaz (2) et, pendant la maturation des fruits, leur activité respiratoire est mesurée, dans lequel une concentration d'éthylène prédéterminée est ajustée et régulée dans la chambre de maturation (2), qui est variée pendant la durée du processus de maturation, **caractérisé en ce que**
la concentration d'éthylène est variée en fonction d'une élévation d'une concentration de CO₂ et/ou en fonction d'une réduction d'une concentration d'O₂.

2. Procédé selon la revendication 1, dans lequel la maturation est contrôlée et commandée en fonction d'une respiration des fruits par le biais d'une concentration de CO₂, d'une concentration d'O₂ et d'une concentration d'éthylène dans la chambre de maturation (2).

3. Procédé selon la revendication 1, dans lequel, lors d'un gazage avec de l'éthylène, la concentration d'éthylène est ajustée dans la plage allant de 50 ppm à 300 ppm, de préférence dans la plage allant de 80 ppm à 250 ppm.

4. Procédé selon la revendication 3, dans lequel, après une période de temps prédéterminée, la concentration d'éthylène est maintenue constante à un niveau plus bas, en particulier à au plus 50 ppm, de préférence à au plus 30 ppm.

5. Procédé selon l'une quelconque des revendications précédentes, **caractérisé en ce que** le processus de maturation comprend plusieurs phases, qui sont **caractérisées par** leurs concentrations en gaz, dans lequel, dans une première phase, une élévation continue de la concentration de CO₂ est mesurable et, dans une phase finale, aucune élévation de la concentration de CO₂ n'est mesurable dans la chambre de maturation (2).

6. Procédé selon la revendication 5, **caractérisé en ce que**, dans une phase intermédiaire, un gazage avec de l'éthylène a lieu dès que, dans la première phase, une augmentation constante de la concentration de CO₂ et/ou une réduction constante de la concentration d'O₂ est mesurée.

7. Procédé selon l'une quelconque des revendications 5 ou 6, **caractérisé en ce que**, dans la phase finale, la concentration de CO₂ et/ou d'O₂ est maintenue constante.

8. Procédé selon la revendication 6, dans lequel, dans la phase intermédiaire, la valeur de consigne pour une alimentation en éthylène est régulée, c'est-à-dire abaissée ou accrue en fonction de la concentration de dioxyde de carbone, afin d'empêcher une maturation trop rapide ou de stimuler le processus de mûrissement.

9. Procédé selon l'une quelconque des revendications précédentes, dans lequel un contrôle et/ou une commande de la température (air et fruit) dans la chambre de maturation (2) et ainsi des fruits a lieu et/ou dans lequel la mesure des paramètres a lieu de manière continuelle ou par intervalles.

10. Procédé selon l'une quelconque des revendications précédentes, dans lequel une impression de couleur est mesurée de manière manuelle et/ou automatisée et attribuée, éventuellement au moyen d'un algorithme, à un degré de mûrissement décrit par un indice de mûrissement.

11. Procédé selon la revendication 10, dans lequel la mesure du degré de mûrissement fait partie d'une boucle de régulation au sein du procédé.

12. Chambre de mûrissement (1) pour faire mûrir des fruits climactériques comprenant une chambre de maturation étanche aux gaz (2), dans laquelle la chambre de mûrissement (1) est conçue pour réaliser un procédé selon l'une quelconque des revendications précédentes et comprend un moyen de circulation permanente de l'air dans la chambre de maturation (2),
dans laquelle la chambre de mûrissement (1) comprend respectivement un moyen (4, 5, 6) pour la mesure d'une concentration d'éthylène, d'une concentration de CO₂, d'une concentration d'O₂ et éventuellement d'une température au sein de la chambre de maturation (2), ainsi que des moyens appropriés (6) pour l'évaluation des valeurs de mesure obtenues et un moyen (16), relié avec un moyen (6) pour l'évaluation, pour la commande et la régulation de la concentration d'éthylène au sein de la chambre de maturation (2) de la chambre (1), et éventuellement un moyen supplémentaire (7, 8, 9, 10, 15), relié avec un moyen (6) pour l'évaluation, pour la commande et la régulation d'une atmosphère au sein de la chambre de maturation (2) de la chambre (1).
